(19) Europäisches Patentamt
European Patent Office
Office européen des brevets

(11) **EP 2 731 231 A2**

## (12) EUROPEAN PATENT APPLICATION
published in accordance with Art. 153(4) EPC

(43) Date of publication:
**14.05.2014 Bulletin 2014/20**

(21) Application number: **12807733.6**

(22) Date of filing: **06.07.2012**

(51) Int Cl.:
***H02J 17/00*** (2006.01)        ***H02J 7/02*** (2006.01)

(86) International application number:
**PCT/KR2012/005355**

(87) International publication number:
**WO 2013/006004 (10.01.2013 Gazette 2013/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **07.07.2011   KR 20110067388
04.07.2012   KR 20120072826**

(71) Applicant: **Samsung Electronics Co., Ltd.
Suwon-si, Gyeonggi-do 443-742 (KR)**

(72) Inventors:
• **KIM, Nam Yun
Yongin-si
Gyeonggi-do 446-712 (KR)**

• **KWON, Sang Wook
Yongin-si
Gyeonggi-do 446-712 (KR)**
• **HONG, Young Tack
Yongin-si
Gyeonggi-do 446-712 (KR)**

(74) Representative: **Jenkins, Richard Gavin
Harrison Goddard Foote LLP
Saviour House
9 St Saviourgate
York YO1 8NQ (GB)**

(54) **WIRELESS POWER TRANSMITTING AND CHARGING SYSTEM, AND METHOD FOR CONTROLLING COMMUNICATION AND POWER IN THE WIRELESS POWER TRANSMITTING AND CHARGING SYSTEM**

(57)    Disclosed are a wireless power transmitting and charging system, and a method for controlling communication and power in the wireless power transmitting and charging system. "Wireless power" means energy transferred from a wireless power transmitting apparatus to a wireless power receiving apparatus through a magnetic coupling. Thus, the wireless power transmitting and charging system includes a source device for wirelessly transmitting power, and a target device for wirelessly receiving power. Here, the source device may be referred to as a wireless power transmitting apparatus, and the target device may be referred to as a wireless power receiving apparatus. The source device and the target device may communicate with each other for wireless power charging.

FIG. 2

EP 2 731 231 A2

## Description

Technical Field

The following description relates to a wireless power transmitting and charging system, and a method for controlling communication and power in the wireless power transmitting and charging system.

Background Art

Wireless power refers to energy that is transferred from a wireless power transmission apparatus to a wireless power reception apparatus through magnetic coupling. Accordingly, a wireless power charging system includes a source device configured to wirelessly transmit power, and a target device configured to wirelessly receive power. The source device may be referred to as a wireless power transmission apparatus, and the target device may be referred to as a wireless power reception apparatus.

The source device may include a source resonator, and the target device may include a target resonator. Magnetic coupling or resonant coupling may be formed between the source resonator and the target resonator.

Disclosure of Invention

Technical solutions

In one general aspect, there is provided a method for controlling communication and power in a wireless power transmitting and charging system, the method including: transmitting a wake-up request signal for initial communication to at least one target device; transmitting charging power to the at least one target device, the charging power being used to charge the at least one target device; receiving at least one of information on a reception sensitivity of the wake-up request signal and information on a reception level of the charging power from the at least one target device; and detecting a target device located within a power transmission region of a source device, based on at least one of the information on the reception sensitivity of the wake-up request signal and the information on the reception level of the charging power.

In another general aspect, there is provided a method for controlling communication and power in a wireless power transmitting and charging system, the method including: transmitting, by a source device, wake-up power to at least one target device, the wake-up power being used to activate a communication function and a control function of each of the at least one target device; transmitting a wake-up request signal for initial communication to the at least one target device; transmitting charging power to the at least one target device based on a preset transmission timing, the charging power being used to charge the at least one target device; and receiving, from the at least one target device, at least one of information on a reception sensitivity of the wake-up request signal, and information on a reception timing of the charging power.

In another general aspect, there is provided a method for controlling communication and power in a wireless power transmitting and charging system, the method including: receiving, from a source device, wake-up power used to activate a communication function and a control function; activating a communication module using the wake-up power; receiving a wake-up request signal for initial communication from the source device; receiving, from the source device, charging power used to perform charging; and receiving an assigned control identifier (ID) from the source device, based on information on a reception sensitivity of the wake-up request signal, and information on a reception level of the charging power.

In another general aspect, there is provided a method for controlling communication and power in a wireless power transmitting and charging system, the method including: receiving, from a source device, wake-up power used to activate a communication function and a control function; activating a communication module using the wake-up power; receiving a wake-up request signal for initial communication from the source device; receiving charging power based on a preset transmission timing from the source device; and receiving an assigned control ID from the source device, based on information on a reception sensitivity of the wake-up request signal, and information on a reception timing of the charging power.

In another general aspect, there is provided a wireless power transmitting apparatus in a wireless power transmitting and charging system, the wireless power transmitting apparatus including: a power converter to generate wake-up power or charging power by converting a direct current (DC) voltage to an alternating current (AC) voltage, using a resonant frequency; a source resonator to transmit the wake-up power or the charging power to a target device through magnetic coupling; and a control/communication unit to transmit a wake-up request signal for initial communication to the target device via out-band communication, and to receive at least one of information on a reception sensitivity of the wake-up request signal, and information on a reception level of the charging power from the target device.

In another general aspect, there is provided a wireless power transmitting apparatus in a wireless power transmitting and charging system, the wireless power transmitting apparatus including: a power converter to generate wake-up power or charging power by converting a DC voltage to an AC voltage, using a resonant frequency; a source resonator to transmit the wake-up power or the charging power to a target device through magnetic coupling; and a control/communication unit to transmit a wake-up request signal for initial communication to the target device via out-band communication , to control a transmission timing of the charging power, and to receive at least one of information on a reception sensitivity of the wake-up request signal, and information on a reception timing of the charging power from the target device.

In another general aspect, there is provided a wireless power receiving apparatus in a wireless power transmitting and charging system, the wireless power receiving apparatus including: a target resonator to receive wake-up power or charging power from a source device through magnetic coupling, the wake-up power being used to activate a communication function and a control function, and the charging power being used to perform charging; a communication module to receive a wake-up request signal for initial communication from the source device, and to transmit information on a reception sensitivity of the wake-up request signal, and information on a reception level of the charging power to the source device, the communication module being activated by the wake-up power; and a controller to detect information on a reception timing of the charging power, the information on the reception sensitivity of the wake-up request signal, and the information on the reception level of the charging power.

In another general aspect, there is provided a wireless power receiving apparatus in a wireless power transmitting and charging system, the wireless power receiving apparatus including: a target resonator to receive wake-up power from a first source device through magnetic coupling, the wake-up power being used to activate a communication function and a control function; a communication module to receive a wake-up request signal for initial communication from a second source device, and to transmit information on a reception sensitivity of the wake-up request signal to the second source device, the communication module being activated by the wake-up power; and a controller to detect the reception sensitivity of the wake-up request signal.

Effects of the Invention

According to embodiments of the present invention, it is possible to efficiently operate a wireless power transmitting and charging system, since power cells are distinguishable from each other in a multi-source environment.

Additionally, it is possible to prevent power of a source device from being wasted, by transmitting power in a specific condition.

Furthermore, a source device may independently transmit wireless power and data to a target device, by assigning a control identifier (ID) to the target device.

Brief Description of Drawings

FIG. 1 illustrates a wireless power transmitting and charging system according to an embodiment.

FIG. 2 is a diagram illustrating an example of a multi-source environment according to an embodiment.

FIG. 3 is a diagram illustrating operating modes of a wireless power transmitting and charging system according to an embodiment.

FIG. 4 is a diagram illustrating a method for controlling communication and power in a wireless power transmitting and charging system according to an embodiment.

FIG. 5 is a diagram illustrating a target device detection criterion according to an embodiment.

FIG. 6 is a diagram illustrating a basic format of a transmission packet according to an embodiment.

FIG. 7 is a diagram illustrating a basic format of an identifier (ID) assignment command according to an embodiment.

FIG. 8 is a diagram illustrating a basic format of an acknowledgement (ACK) command of a target device according to an embodiment.

FIG. 9 is a diagram illustrating an example of a communication timing, and a power transmission timing according to an embodiment.

FIG. 10 is a diagram illustrating a type of commands according to an embodiment.

FIG. 11 is a diagram illustrating examples of a distribution of a magnetic field in a source resonator and a feeder according to an embodiment.

FIG. 12 is a diagram illustrating an example of a wireless power transmitting apparatus according to an embodiment.

FIG. 13 is a diagram illustrating an example of a distribution of a magnetic field within a source resonator based on feeding of a feeding unit according to an embodiment.

FIG. 14 is a diagram illustrating an example of a multi-source environment similar to the multi-source environment of FIG. 2.

FIG. 15 is a diagram illustrating a communication and wireless power transmission method in the multi-source environment of FIG. 14.

FIG. 16 is a graph illustrating an example of power output from a source device 1 of FIG. 15.

Best Mode for Carrying Out the Invention

The following detailed description is provided in order to explain the example embodiments by referring to the figures.

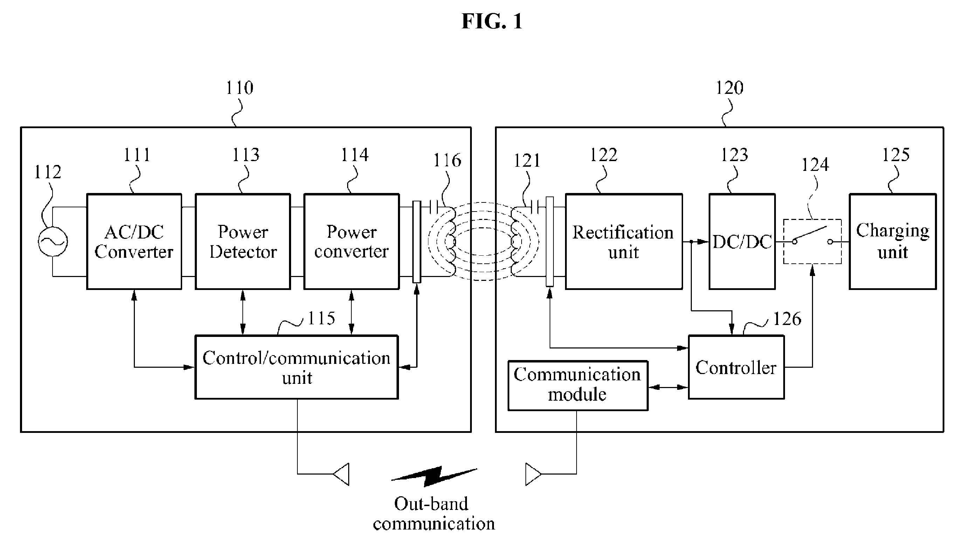

FIG. 1 illustrates a wireless power transmitting and charging system according to an embodiment.

Referring to FIG. 1, the wireless power transmitting and charging system may include a source device 110, and a target device 120.

The source device 110 may include an alternating current-to-direct current (AC/DC) converter 111, a power detector 113, a power converter 114, a control and communication (control/communication) unit 115, and a source resonator 116.

The target device 120 may include a target resonator 121, a rectification unit 122, a DC-to-DC (DC/DC) converter 123, a switch unit 124, a charging unit 125, and a controller 126. Additionally, the target device 120 may further include a communication module.

The AC/DC converter 111 may generate a DC voltage by rectifying an AC voltage in a band of tens of hertz (Hz) output from a power supply 112. The AC/DC converter 111 may output a DC voltage of a predetermined level, or may adjust an output level of a DC voltage based on the control of the control/communication unit 115.

The power detector 113 may detect an output current and an output voltage of the AC/DC converter 111, and may transfer, to the control/communication unit 115, information on the detected current and the detected voltage. Additionally, the power detector 113 may detect an input current and an input voltage of the power converter 114.

The power converter 114 may generate wake-up power or charging power, by converting a DC voltage to an AC voltage, using a resonant frequency.

The power converter 114 may generate power by converting a DC voltage of a predetermined level to an AC voltage, using a switching pulse signal in a band of a few kilohertz (KHz) to tens of megahertz (MHz). For example, the power converter 114 may convert a DC voltage to an AC voltage, using a resonant frequency, and may generate "wake-up power" or "charging power" that may be used in a target device. The "wake-up power" may refer to energy used to activate a communication function and a control function of a target device. The charging power may continue to be transmitted for a predetermined period of time, and may be transmitted at a higher power level than the "wake-up power." For example, the "wake-up power" may have a power level of 0.1 watt (W) to 1 W, and the charging power may have a power level of 1 W to 20 W.

The control/communication unit 115 may control a frequency of a switching pulse signal. Under the control of the control/communication unit 115, the frequency of the switching pulse signal may be determined.

The control/communication unit 115 may also perform out-band communication that employs a communication channel. The control/communication unit 115 may include a communication module, for example, one configured to process ZigBee, Bluetooth, and the like. The control/communication unit 115 may transmit and receive data to and from the target device 120 through the out-band communication.

The control/communication unit 115 may transmit a wake-up request signal for initial communication through the out-band communication to the target device 120, and may receive, from the target device 120, at least one of information on a reception sensitivity of the wake-up request signal, and information on a reception level of the charging power. Additionally, the control/communication unit 115 may detect a target device located in a power transmission region of the source device 110, based on at least one of the information on the reception sensitivity of the wake-up request signal, and the information on the reception level of the charging power. For example, when the reception sensitivity of the wake-up request signal is equal to or greater than a preset value, and when the reception level of the charging power is equal to or greater than a preset level, the control/communication unit 115 may determine that a target device that transmits the information on the reception sensitivity of the wake-up request signal and the information on the reception level of the charging power, is located in the power transmission region of the source device 110.

The control/communication unit 115 may transmit a wake-up request signal for initial communication to the target device 120 via out-band communication, may control a transmission timing of the charging power, and may receive, from the target device 120, at least one of information on a reception sensitivity of the wake-up request signal, information on a wake-up time of the target device, and information on a reception timing of the charging power. The control/communication unit 115 may detect a target device located in a power transmission region of the source device 110, based on at least one of the information on the reception sensitivity of the wake-up request signal, the information on the wake-up time of the target device, and the information on the reception timing of the charging power. For example, when the reception sensitivity of the wake-up request signal is equal to or greater than a preset value, and when the information on the reception timing of the charging power is matched to a preset transmission timing, the control/communication unit 115 may determine that a target device that transmits the information on the reception sensitivity of the wake-up request signal and the information on the reception timing of the charging power is located in the power transmission region of the source device 110.

The source resonator 116 may transfer electromagnetic energy to the target resonator 121. For example, the source resonator 116 may transfer "wake-up power" or "charging power" to the target device 120, via magnetic coupling with the target resonator 121.

The target resonator 121 may receive the electromagnetic energy from the source resonator 116. For example, the target resonator 121 may receive "wake-up power" used to activate a communication function and a control function, or "charging power" used to perform charging from the source device 110, via the magnetic coupling with the source resonator 116.

The rectification unit 122 may generate a DC voltage by rectifying an AC voltage. For example, the rectification unit 122 may rectify an AC voltage received from the target resonator 121.

The DC/DC converter 123 may adjust a level of the DC voltage output from the rectification unit 122 based on a capacity required by the charging unit 125. For example, the DC/DC converter 123 may adjust the level of the DC voltage output from the rectification unit 122 to a level in a range from 3 volts (V) to 10 V.

The switch unit 124 may be powered on or off, based on the control of the controller 126. When the switch unit 124 is powered off, the control/communication unit 115 of the source device 110 may detect a reflected wave. For example, when the switch unit 124 is powered off, the magnetic coupling between the source resonator 116 and the target resonator 121 may be eliminated.

The charging unit 125 may include a battery. The charging unit 125 may charge the battery, using the DC voltage output from the DC/DC converter 123.

In FIG. 1, the controller 126, and the communication module may be activated by the wake-up power. The communication module may be activated by the wake-up power, may receive, from the source device 110, the wake-up request signal for initial communication, and may transmit, to the source device 110, information on a reception sensitivity of the wake-up request signal, and information on a reception level of the charging power. The communication module may transmit and receive data to and from the source device 110 via outband communication.

The controller 126 may detect the information on the reception sensitivity of the wake-up request signal, the information on the reception level of the charging power, and the information on the reception timing of the charging power. The information on the reception level of the charging power, and the information on the reception timing of the charging power may be measured between the target resonator 121 and the rectification unit 122, or between the rectification unit 122 and the DC/DC converter 123.

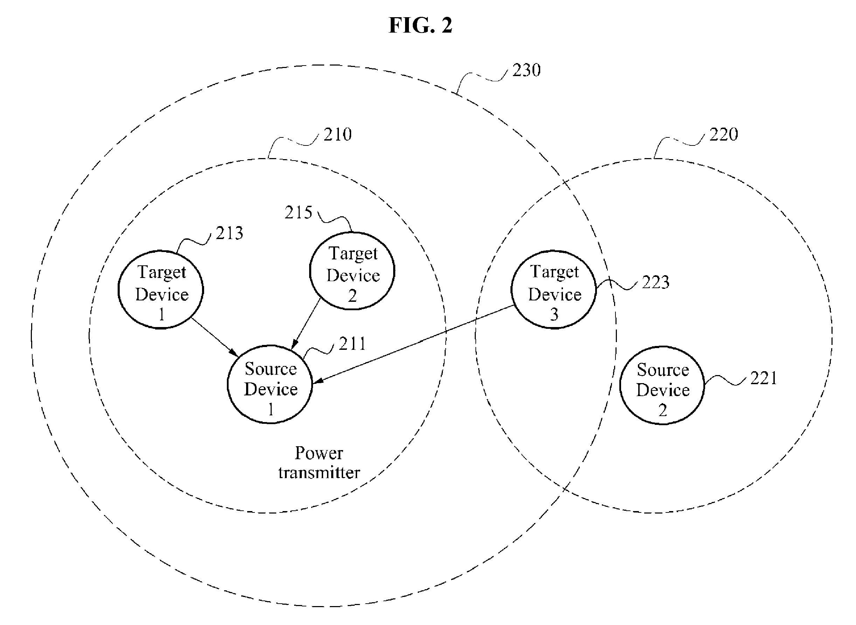

FIG. 2 is a diagram illustrating an example of a multi-source environment according to an embodiment.

Referring to FIG. 2, the multi-source environment may include a plurality of source devices, for example, a source device 1 211, and a source device 2 221. A power transmission region 210 of the source device 1 211 may be set not to overlap with a power transmission region 220 of the source device 2 221. The source device 2 221 may be called a "neighboring source device" located within a predetermined distance from the source device 1 211.

A target device 1 213, and a target device 2 215 may be located within the power transmission region 210 of the source device 1 211. A target device 3 223 may be located within the power transmission region 220 of the source device 2 221. Accordingly, a target resonator of the target device 3 223 may receive wake-up power used to activate a communication function and a control function, from the source device 2 221, through magnetic coupling.

When out-band communication is performed in the multi-source environment, a communicable region 230 of the source device 1 211 may be wider than the power transmission region 210. Each of the source device 1 211 and the source device 2 221 may need to accurately detect a target device located within a region enabling power transmission. The target device 3 223 may be located within the power transmission region 220 of the source device 2 221, as shown in FIG. 2, however, may be located within the communicable region 230 of the source device 1 211. Accordingly, a communication module of the target device 3 223 may be activated by wake-up power received from the source device 2 221, and may receive a wake-up request signal for initial communication from the source device 1 211. The target device 3 223 may receive wake-up power from the source device 2 221, and may receive the wake-up request signal from the source device 1 211. When a wake-up request signal for initial communication is received from the source device 1 211, the communication module of the target device 3 223 may need to transmit information on a reception sensitivity of the wake-up request signal to the source device 1 211.

The source device 1 211 may need to detect that the target device 3 223 is not located in the power transmission region 210. The source device 1 211 may assign control identifiers (IDs) to the target device 1 213, and the target device 2 215 located in the power transmission region 220. The control IDs may be used by a source device to identify target devices in a charging mode.

Hereinafter, examples of accurately detecting a target device located within a region enabling power transmission will be described with reference to FIGS. 2 through 5.

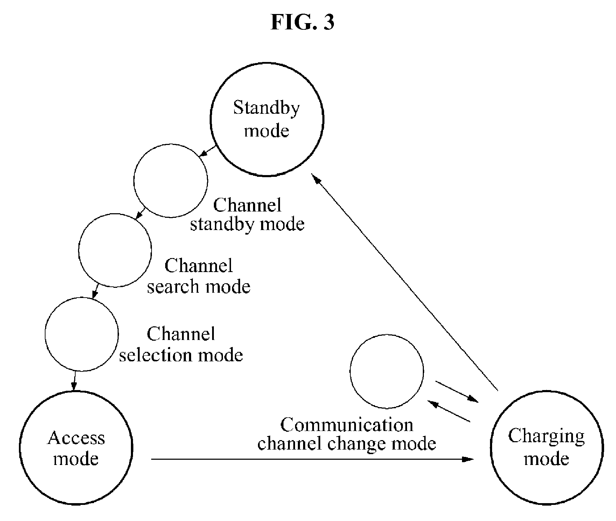

FIG. 3 is a diagram illustrating operating modes of a wireless power transmitting and charging system according to an embodiment.

Referring to FIG. 3, the operating modes of the wireless power transmitting and charging system are broadly classified into a standby mode, an access mode, and a charging mode. The standby mode includes a state in which a source device does not perform any operation, since a target device does not exist in a power transmission region of the source device. For example, when the standby mode is terminated due to a specific event, the source device may search for a channel to perform outband communication. In this example, the source device may detect a plurality of communication channels, and may select a communication channel with a best state from among the plurality of communication channels. When the communication channel with the best state is selected, the source device may operate in the access mode. The source device may transmit a wake-up request signal via the selected communication channel. The access mode refers to a mode in which the source device and the target device transmit and receive data via communication. The charging mode refers to a mode in which charging power is transferred. The operating modes of FIG. 3 are merely examples, and accordingly various operating modes may exist. In the charging mode, the source device may verify a quality of a communication channel. The charging mode may be changed to a communication channel change mode. Because the communication channel may be changed through the out-band communication, the charging power may continue to be transmitted. In the communication channel change mode, the source device may verify the quality of the communication channel, and may transmit a command to request a change in the communication channel to the target device.

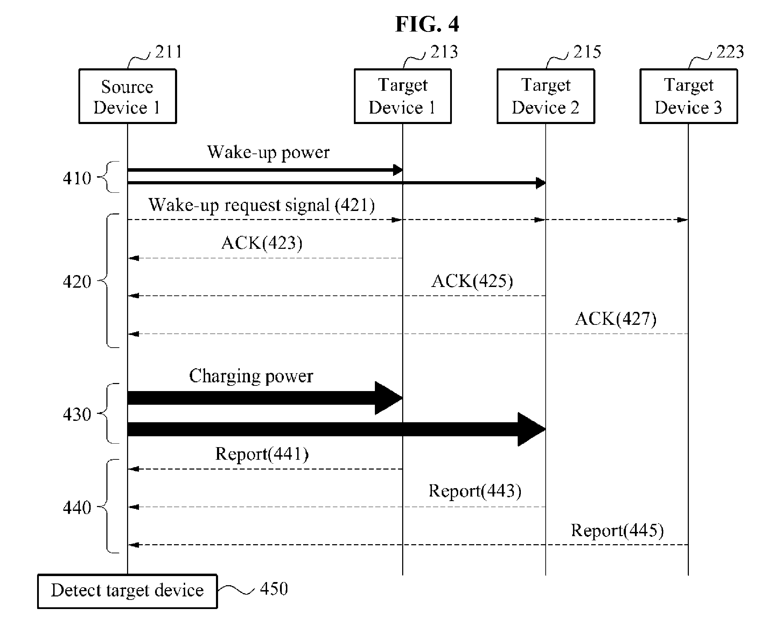

FIG. 4 is a diagram illustrating a method for controlling communication and power in a wireless power transmitting and charging system according to an embodiment.

Referring to FIGS. 2 and 4, the target device 1 213, and the target device 2 215 5 may be located within the power transmission region 210 of the source device 1 211, and the target device 3 223 may be located within the power transmission region 220 of the source device 2 221.

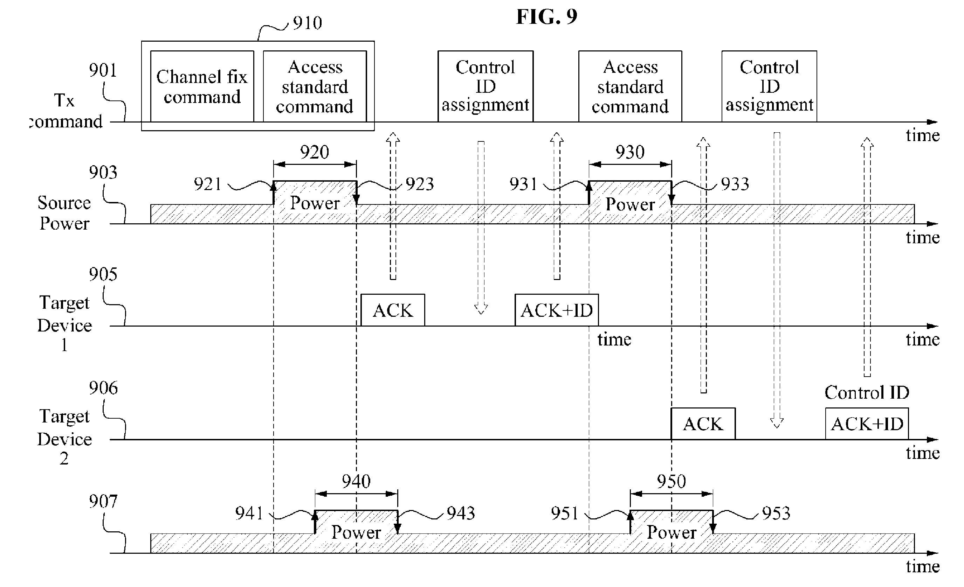

In 410, the source device 1 211 may transmit, to at least one target device, wake-up power used to activate a communication function and a control function of each of the at least one target device. For example, the source device 1 211 may transmit the wake-up power to the target device 1 213, and the target device 2 215. As illustrated in FIG. 9, the wake-up power may continue to be transmitted in operations 410 through 440. Additionally, the wake-up power may be periodically transmitted. Each of the target device 1 213, and the target device 2 215 may activate a communication module using the wake-up power.

In 420, the source device 1 211 may detect a target device, via communication.

In 421, the source device 1 211 may transmit a wake-up request signal for initial communication to each of the at least one target device. For example, the source device 1 211 may transmit the wake-up request signal to each of the target device 1 213, and the target device 2 215. Since the target device 3 223 is located within the communicable region 230 of the source device 1 211, a wake-up request signal may be received.

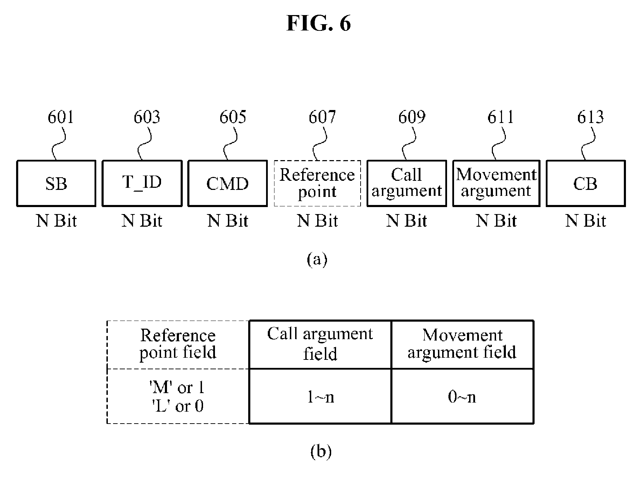

The wake-up request signal may include a channel fix command to request the at least one target device to maintain a communication channel selected by a source device. Additionally, the wake-up request signal may be a transmission packet of FIG. 6. The wake-up request signal may include a command to request information on an amount of power to be received, a command to request a received signal strength indicator (RSSI) of a communication signal, and a command to request a link quality indicator (LQI), in addition to the channel fix command. The LQI may be information indicating a communication quality state. Since the communication signal may have a low communication quality, despite a high RSSI, a communication channel with a high quality may be selected based on a value of an LQI.

In operations 423 through 427, each of the at least one target device may transmit an acknowledgement (ACK) signal corresponding to the wake-up request signal to the source device 1 211.

In 430, the source device 1 211 may transmit charging power to the at least one target device. The source device 1 211 may transmit the charging power to the target device 1 213, and the target device 2 215. The target device 3 223 may fail to receive the charging power, because the target device 3 223 is located outside the power transmission region 210 of the source device 1 211.

Additionally, in 430, the source device 1 211 may transmit the charging power to the at least one target device, based on a preset transmission timing.

In 440, the source device 1 211 may receive, from the at least one target device, at least one of information on a reception sensitivity of the wake-up request signal, and information on a reception level of the charging power. In operations 441 through 445, the target device 1 213, the target device 2 215, and the target device 3 223 may report the information on the reception sensitivity of the wake-up request signal, and the information on the reception level of the charging power to the source device 1 211. Additionally, in operations 441 through 445, the target device 1 213, the target device 2 215, and the target device 3 223 may also report the information on the reception sensitivity of the wake-up request signal, and information on a reception timing of the charging power to the source device 1 211. The information on the reception timing of the charging power may include information on a reception period of the charging power, information on a reception start time of the charging power, and information on a reception end time of the charging power. The preset transmission timing may be set to differ from a charging power transmission timing of a neighboring source device located within a predetermined distance from the source device. The source device 1 211, and the source device 2 221 may communicate with each other, to adjust the charging power transmission timing.

In 450, the source device 1 211 may detect a target device located within the power transmission region 210. After operation 450, the source device 1 211 may assign a control ID to identify target devices located within the power transmission region 210. For example, the source device 1 211 may assign control IDs to the target device 1 213, and the target device 2 215. The control IDs may be assigned to the target device 1 213, and the target device 2 215, respectively, based on the information on the reception sensitivity of the wake-up request signal, and the information on the reception level of the charging power. A reception level of charging power received by the target device 3 223 may be less than a preset level, or may be close to zero. Accordingly, a control ID may not be assigned to the target device 3 223 by the source device 1 211.

Additionally, the control IDs may be assigned by the source device to the target device 1 213, and the target device 2 215, based on the information on the reception sensitivity of the wake-up request signal, and the information on the reception timing of the charging power. When the target device 3 223 receives charging power from the source device 2 221, the target device 3 223 may not receive an assigned control ID from the source device 1 211, because a charging power transmission timing of the source device 1 211 is different from a charging power transmission timing of the source device 2 221.

According to an embodiment, a source device may accurately detect a target device located within a power transmission region, based on a wake-up time of the target device. The wake-up time may refer to a time in which a controller and a communication module of the target device are activated. For example, when a communication function and a control function of each of the target device 1 213, and the target device 2 215 are activated by wake-up power, a time in which a controller or a communication module of each of the target device 1 213 and the target device 2 215 is activated, may be transmitted to the source device 1 211. When a time in which wake-up power is transmitted is matched to the wake-up time, the source device 1 211 may assign control IDs to the target device 1 213, and the target device 2 215.

The source device 1 211, the target device 1 213, the target device 2 215, and the target device 3 223 may perform out-band communication. Accordingly, a band of a resonant frequency used to form magnetic coupling may be different from a band of a frequency for communication that is used to transmit the wake-up request signal to the at least one target device. For example, the band of the resonant frequency may be in a range of 5 MHz to 20 MHz, and the band of the frequency for communication may be in a range of 6 MHz to 70 gigahertz (GHz). The wake-up power, and the charging power may be transferred through magnetic coupling formed between a source resonator of the source device and a target resonator of each of the at least one target device.

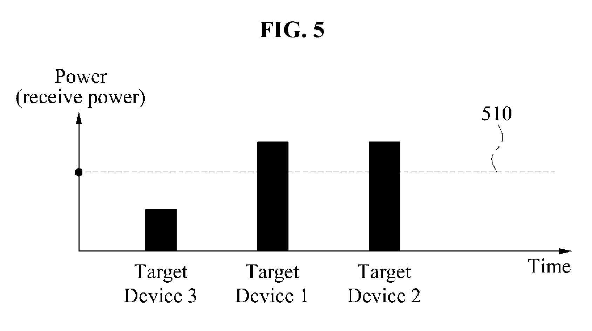

FIG. 5 is a diagram illustrating a target device detection criterion according to an embodiment.

Referring to FIG. 5, power (receive power) may indicate a reception sensitivity of a wake-up signal, or a reception level of charging power. Since an amount of power received by each of a target device 1, and a target device 2 is greater than a preset criterion 510, the target devices 1 and 2 may receive assigned control IDs from a source device. However, since an amount of power received by a target device 3 is less than the preset criterion 510, the target device 3 may not receive a control ID from the source device. Additionally, since a reception sensitivity of a wake-up signal for each of the target devices 1 and 2 is greater than the preset criterion 510, the target devices 1 and 2 may receive assigned control IDs from the source device.

FIG. 6 is a diagram illustrating a basic format of a transmission packet according to an embodiment.

The transmission packet of FIG. 6 refers to a transmission packet transmitted from a source device to a target device. FIG. 6 (a) illustrates fields included in the transmission packet. The transmission packet may include a start bit (SB) field 801, a target ID (T_ID) field 803, a command (CMD) field 805, a reference point field 807, a call argument field 809, a movement argument field 811, and a check bit (CB) field 813. The target device may generate information required to identify target devices, by receiving an access standard through the transmission packet. The reference point field 807, the call argument field 809, and the movement argument field 811 may be changed based on a command included in the CMD field 805. For example, the reference point field 807, the call argument field 809, and the movement argument field 811 may be used as DATA fields to transmit data.

The SB field 801 may include a bit-type recognizer indicating a beginning of a packet. For example, N bits may be assigned to the SB field 801, based on a size of the entire packet.

The T_ID field 803 may include a control ID, when the control ID is assigned to the target device. The T_ID field 803 may include a null value, when a control ID is not assigned to the target device.

The CMD field 805 may include a command used to define an operation of a source. The command may include, for example, a reset command, a command to request an input voltage and input current of a target device, a command to request an output voltage and output current of a DC/DC converter of a target device, an ACK command, a command to request a load of a target device to be powered on, a command to request a load of a target device to be powered off, a command to request state information of a target device, a command to transfer an access standard, a negative acknowledge (NACK) command, a command to assign a control ID, a command to request registration information of a target device, and the like.

The reference point field 807 may include a reference point. The reference point may refer to a reference used to generate a temporary ID among unique IDs of target devices. The reference point may be, for example, a most significant bit (MSB), or a least significant bit (LSB), among bits of the unique IDs of the target devices. The reference point may represent a predetermined position in the unique IDs of the target devices. When a reference point to generate a temporary ID is set in advance between a source device and a target device, the reference point field 807 may be omitted from the access standard command. Additionally, when the reference point is set in advance to be an MSB or an LSB among bits of a unique ID of a target device, the reference point field 807 may also be omitted from the access standard command. A dotted line box of FIG. 6 may indicate that the reference point field 807 may be omitted from the access standard command.

The call argument field 809 may include a call argument. The call argument may indicate n consecutive bits starting from the reference point. A call parameter may be a value used when a source device calls a predetermined bit from a target device. The call parameter may be determined based on the call argument. For example, when a call argument corresponds to 3 bits, a call parameter may have a value of "000" to "111."

The movement argument field 811 may include a movement argument. The movement argument may indicate a number of bits corresponding to movement of the reference point. The movement argument may indicate how much the reference point moves. For example, when a movement argument is set to "1," a reference point may move to the right or the left by 1 bit. A number of bits assigned to the movement argument field 811 may be adjusted based on the size of the entire packet.

The CB field 813 may include a check bit used to verify accurate transmission of a packet.

The access standard command may include various fields, in addition to the reference point field 807, the call argument field 809, and the movement argument field 811. For example, the access standard command may include various fields assigned in bits or bytes.

FIG. 6 (b) illustrates, in detail, the reference point field 807, the call argument field 809, and the movement argument field 811. In the reference point field 807, a reference point may be set. When a reference point is set to an MSB, "M" or "1" may be set. When a reference point is set to an LSB, "L" or "0" may be set. In the call argument field 809, a call argument may be set. The call argument may be determined based on a number of detected target devices, and may have a value of "1" to "n." In the movement argument field 811, a movement argument may be set. The movement argument may also be determined based on the number of the detected target devices, and may have a value of "0" to "n."

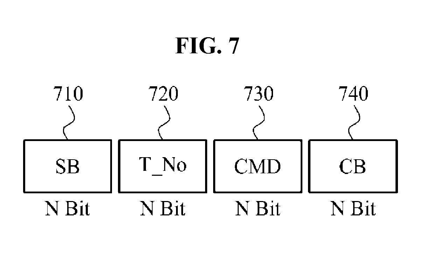

FIG. 7 is a diagram illustrating a basic format of an ID assignment command according to an embodiment.

Referring to FIG. 7, the ID assignment command may include an SB field 710, a control ID (T_No) field 720, a CMD field 730, and a CB field 740.

The SB field 710 may include a bit-type recognizer indicating a beginning of a packet. For example, N bits may be assigned to the SB field 710, based on a size of the entire packet.

The control ID (T_No) field 720 may include a control ID assigned to the target device by a source. The target device may acquire an ID that may be communicated independently of the source, based on the control ID of the control ID (T_No) field 720.

The CMD field 730 may include a command used to define an operation of a source. Since FIG. 5 illustrates the ID assignment command, the CMD field 730 may include the ID assignment command. A code may be assigned to a command.

The CB field 740 may include a check bit used to verify accurate transmission of the packet.

The ID assignment command may various fields, in addition to the SB field 710, the control ID (T_No) field 720, the CMD field 730, and the CB field 740. For example, the access standard command may include various fields assigned in bits or bytes.

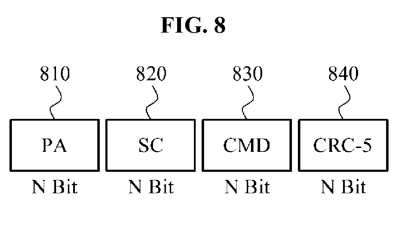

FIG. 8 is a diagram illustrating a basic format of an ACK command of a target device according to an embodiment.

Referring to FIG. 8, a response command may include a preamble (PA) field 810, a start code (SC) field 820, a CMD field 830, and a cycle redundancy checking (CRC)-5 field 840.

The PA field 810 may include dummy data that is optionally transmitted to prevent a loss of a packet in a wireless packet.

The SC field 820 may include a recognizer indicating a beginning of a shortened packet, when a response command includes four fields, for example, the PA field 810, the SC field 820, the CMD field 830, and the CRC-5 field 840. In a typical packet, a transmitter's address field, a receiver's address field, a data field, and the like may be further included.

The CMD field 830 may include a command used to define an operation of a target device. The command may include, for example, a reset command, a command to respond to an input voltage and input current of a target device, a command to respond to an output voltage and output current of a DC/DC converter of a target device, an ACK command, a command to respond to state information of a target device, a command to respond to registration information of a target device, and the like. A code may be assigned to each of the commands. Since FIG. 6 illustrates the response command, the CMD field 830 may include an ACK response command. A code may be assigned to a command.

The CRC-5 field 840 may include a CRC code used to verify accurate transmission of a packet.

FIG. 9 is a diagram illustrating an example of a communication timing, and a power transmission timing according to an embodiment.

In FIG. 9, reference numeral 901 indicates a communication timing of a first source device, and reference numeral 903 indicates a power transmission timing of the first source device. Additionally, in FIG. 9, reference numeral 905 indicates a communication timing of a target device 1, and reference numeral 906 indicates a communication timing of a target device 2.

In the power transmission timing 903 of the first source device, wake-up power may be transmitted in intervals other than charging power transmission time intervals 920 and 930. Unlike the example of FIG. 9, a time interval in which wake-up power is not transmitted may exist. A wake-up signal 910 may be transmitted during an initial communication.

In FIG. 9, reference numeral 907 indicates a power transmission timing of a second source device. The second source device may refer to a neighboring source device located within a predetermined distance from the first source device.

As shown in FIG. 9, charging power transmission start times 921 and 931 of the first source device may be set to differ from charging power transmission start times 941 and 951 of the second source device. Accordingly, a time at which a first target device starts to receive charging power from the first source device may be different from a time at which a second target device starts to receive charging power from the second source device.

Additionally, charging power transmission end times 923 and 933 of the first source device may be set to differ from charging power transmission end times 943 and 953 of the second source device. Accordingly, a time at which receiving of charging power by the first target device from the first source device ends may be different from a time at which receiving of charging power by the second target device from the second source device ends.

A duration of each of the charging power transmission time intervals 920 and 930 of the first source device may be set to differ from a duration of each of the charging power transmission time intervals 940 and 950 of the second source device. For example, a duration of the charging power transmission time interval 920 of the first source device may be set to 10 milliseconds (ms), and a duration of the charging power transmission time interval 940 of the second source device may be set to 12 ms.

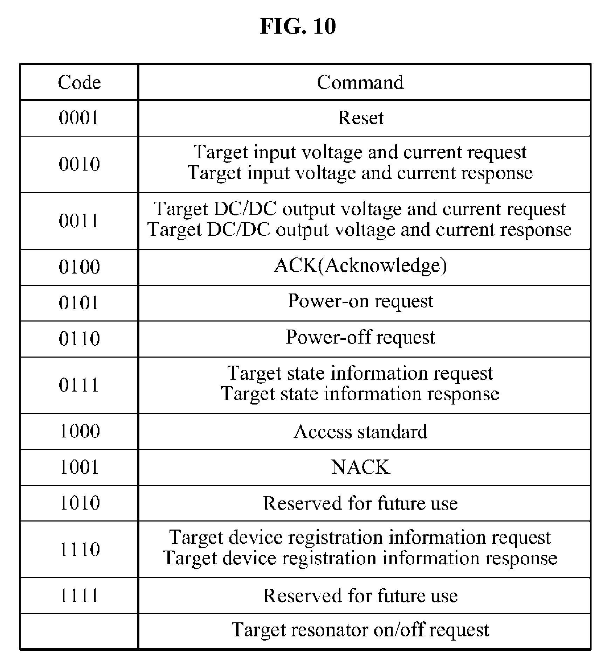

FIG. 10 is a diagram illustrating a type of commands according to an embodiment.

One of codes illustrated in FIG. 10 may be inserted into the CMD field 805 of FIG. 6, the CMD field 730 of FIG. 7, or the CMD field 830 of FIG. 8. Commands illustrated in FIG. 10 are merely examples, and a length of a code may be increased to 4 bits, 8 bits, 12 bits, and the like. For example, although not shown in FIG. 10, a command to verify an amount of power to be transmitted to a target device may be added. The commands illustrated in FIG. 10 may be transmitted after a control ID is assigned.

Reset command, 0001

The "reset command" may be used to request a reset of the target device, in response to an error occurring in an operation of the target device. In response to receiving the "reset command," the target device may transmit an ACK message to a source device. Additionally, the target device may perform a system reset, in response to receiving the "reset command."

Target input voltage and current request command, 0010

The "target input voltage and current request command" may be used to verify a power reception state of the target device. For example, the "target input voltage and current request command" may be used to request an input voltage value and an input current value of the target device. The source device may insert a code "0010" into the CMD field 805, in order to verify the power reception state of the target device, and may transmit, to the target device, a packet including the CMD field 805 into which the code "0010" is inserted.

Target input voltage and current response command, 0010

The "target input voltage and current response command" may be used for a response to the "target input voltage and current request command." The "target input voltage and current response command" may correspond to a response message to a request for the input voltage value and the input current value of the target device. For example, when the packet including the CMD field 805 into which the code "0010" is inserted is received, the target device may measure the input voltage and the input current. The input voltage and the input current may correspond to an output voltage and an output current of the rectification unit 122 of FIG. 1. Additionally, the input voltage and the input current may correspond to an input voltage and an input current of the rectification unit 122 of FIG. 1. The source device may determine a power transmission efficiency, based on the "measured input voltage value and the measured input current value of the target device." For example, the source device may determine an amount of received power based on the "measured input voltage value and the measured input current value of the target device," and may compute the power transmission efficiency, based on a ratio of the amount of the received power to an amount of transmitted power.

Target DC/DC output voltage and current request command, 0011

The "target DC/DC output voltage and current request command" may be used to verify an amount of power to be supplied to a load of the target device. For example, the "target DC/DC output voltage and current request command" may be used to request a DC/DC output voltage value and a DC/DC output current value of the target device.

Target DC/DC output voltage and current response command, 0011

The "target DC/DC output voltage and current response command" may be used for a response to the "target DC/DC output voltage and current request command."

ACK command, 0100

The "ACK command" may be used in a case where reception of a message needs to be notified.

NACK command, 1001

The "NACK command" may be used in a case where an error occurs in a received message.

Power-on request command, 0101

The "power-on request command" may be used when the switch unit 124 of FIG. 1 is requested to be powered on. For example, the "power-on request command" may correspond to a command to direct a power supply to a load. When the "power-on request command" is received, the target device may initiate the power supply to the load.

Power-off request command, 0110

The "power-off request command" may be used when the switch unit 124 of FIG. 1 is requested to be powered off. For example, the "power-off request command" may be used to request interruption of the power supply to the load. When the "power-off request command" is received, the target device may interrupt the power supply to the load. The source device may use the "power-off request command," when a power supply to a predetermined target device, among a plurality of target devices, needs to be interrupted. For example, the source device may transmit the "power-off request command" to a target device with a power transmission efficiency that is lower than a preset level, among the plurality of target devices.

Target state information request command, 0111

The "target state information request command" may be used to request state information of the target device. For example, when a charging state, a temperature, and the like of the target device are requested to be verified, the source device may insert a code "0111" into the CMD field 805, and may transmit, to the target device, a packet including the code "0111." The source device may transmit, to the target device, a wake-up request signal including the target state information request command. The source device may compare a time in which the wake-up request signal including the target state information request command is transmitted, with a time to respond to the wake-up request signal, and may detect a target device located within a power transmission region.

Target state information response command, 0111

The "target state information response command" may correspond to a response to a request for the state information of the target device.

Access standard command, 0111

The "access standard command" may be used to transfer a specific communication regulation to the target device. For example, the source device may transmit, to a plurality of target devices, a communication period, a communication slot, a response regulation, and the like, through the "access standard command." In this example, the communication period, the communication slot, the response regulation, and the like may be inserted in a DATA field (not illustrated).

Target device registration information request command, 1110

The source device may use the "target device registration information request command," to request registration information of the target device. The registration information of the target device may refer to system information of the target device. For example, the registration information of the target device may include a "type of product, such as a television (TV), a camera, a cellular phone, and the like," "manufacturer information," a "product model name," a "battery type," a "charging scheme," an "impedance value of a load," "information on a characteristic of a target resonator," "information on a used frequency band," an "amount of power to be consumed," an "intrinsic identifier," "product version information or standards information," and the like. In this example, the "intrinsic identifier" may include an N-byte serial number, and also may include a short identifier generated by converting the serial number to an M-bit serial number. The information on the characteristic of the target resonator may include a Q-value and a K-value of the target resonator. Additionally, the information on the characteristic of the target resonator may further include information on a type of resonators, such as a resonator having a two-dimensional (2D) structure, or a resonator having a three-dimensional (3D) structure, an L/C value of the resonator, impedance-matching information, and the like.

Target device registration information response command, 1110

The target device may use the "target device registration information response command" as a response to the "target device registration information request command." Accordingly, the "target device registration information response command" may correspond to a response to a request for the registration information of the target device.

Target resonator on/off control command

A "target resonator on/off request command" of FIG. 10 may be used to control a target resonator to be powered on and off. For example, the "target resonator on/off control command" may use a code such as "0000", or a code that is set in advance. Additionally, different codes may be used for a "command to control the target resonator to be powered on," and a "command to control the target resonator to be powered off." For example, when a target resonator of a specific target device among a plurality of target devices, is requested to be powered off, the source device may transmit, to the specific target device, the "command to control the target resonator to be powered off." In response to the "command to control the target resonator to be powered off," the specific target device may control the target resonator to be powered off. For example, the target device may control the target resonator 121 of FIG. 1 to be powered off, by disconnecting the target resonator 121 from the rectification unit 122, or disconnecting the rectification unit 122 from the DC/DC converter 123.

Additional use of commands

Various commands other than the commands of FIG. 10 may be additionally used. For example, a command to request a wake-up time of the target device may be used. The wake-up time may include a time in which a controller or a communication module of the target device is activated.

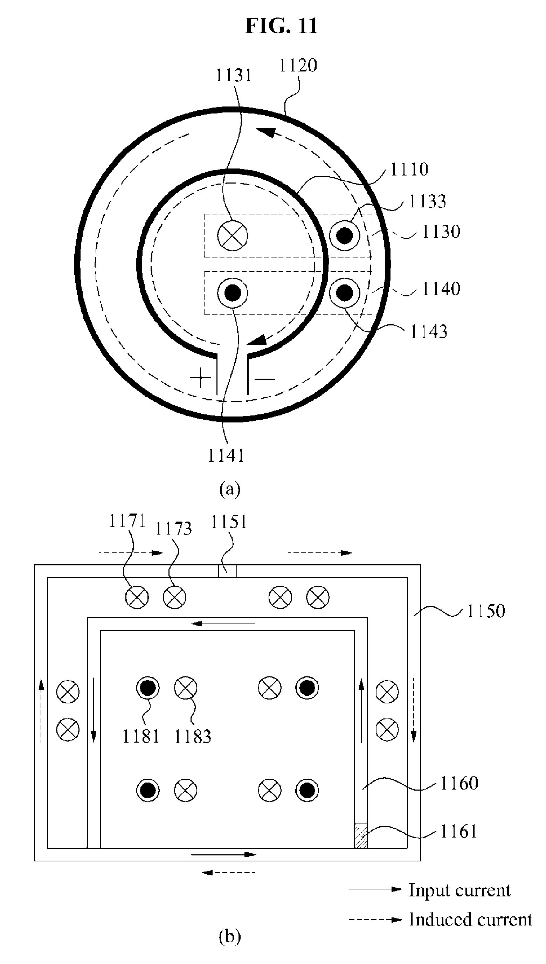

FIG. 11 is a diagram illustrating examples of a distribution of a magnetic field in a source resonator and a feeder according to an embodiment.

When a source resonator receives power supplied through a separate feeder, magnetic fields may be formed in both the feeder and the source resonator.

Referring to FIG. 11 (a), as input current flows into a feeder 1110, a magnetic field 1130 may be formed. A direction 1131 of the magnetic field 1130 within the feeder 1110 may have a phase that is opposite to a phase of a direction 1133 of the magnetic field 1130 outside the feeder 1110. The magnetic field 1130 formed by the feeder 1110 may cause induced current to be formed in a source resonator 1120. The direction of the induced current may be opposite to a direction of the input current.

Due to the induced current, a magnetic field 1140 may be formed in the source resonator 1120. Directions of a magnetic field formed due to induced current in all positions of the source resonator 1120 may be the same. Accordingly, a direction 1141 of the magnetic field 1140 formed by the source resonator 1120 may have the same phase as a direction 1143 of the magnetic field 1140 formed by the source resonator 1120.

Consequently, when the magnetic field 1130 formed by the feeder 1110 and the magnetic field 1140 formed by the source resonator 1120 are combined, strength of the total magnetic field may decrease within the feeder 1110, however, the strength may increase outside the feeder 1110. In an example in which power is supplied to the source resonator 1120 through the feeder 1110 configured as illustrated in FIG. 11A, the strength of the total magnetic field may decrease in the center of the source resonator 1120, but may increase outside the source resonator 1120. In another example in which a magnetic field is randomly distributed in the source resonator 1120, it may be difficult to perform impedance matching, since an input impedance may frequently vary. Additionally, when the strength of the total magnetic field is increased, an efficiency of wireless power transmission may be increased. Conversely, when the strength of the total magnetic field is decreased, the efficiency for wireless power transmission may be reduced. Accordingly, the power transmission efficiency may be reduced on average.

As an example, in a target resonator, a magnetic field may be distributed as illustrated in FIG. 11 (a). Specifically, a current flowing in the source resonator 1120 may be induced by the input current flowing in the feeder 1110. A current flowing in the target resonator may be induced by a magnetic coupling between the source resonator 1120 and the target resonator. The current flowing in the target resonator may cause a magnetic field to be formed, so that an induced current may be generated in a feeder located in the target resonator. In this example, within the feeder, a direction of a magnetic field formed by the target resonator may have a phase opposite to a phase of a direction of a magnetic field formed by the feeder and accordingly, strength of the total magnetic field may be reduced.

FIG. 11 (b) illustrates an example of a structure of a wireless power transmitting apparatus in which a source resonator 1150 and a feeder 1160 have a common ground. The source resonator 1150 may include a capacitor 1151. The feeder 1160 may receive an input of a radio frequency (RF) signal via a port 1161. For example, when the RF signal is input to the feeder 1160, input current may be generated in the feeder 1160. The input current flowing in the feeder 1160 may cause a magnetic field to be formed, and a current may be induced in the source resonator 1150 by the magnetic field. Additionally, another magnetic field may be formed due to the induced current flowing in the source resonator 1150. In this example, a direction of the input current flowing in the feeder 1160 may have a phase opposite to a phase of a direction of the induced current flowing in the source resonator 1150. Accordingly, in a region between the source resonator 1150 and the feeder 1160, a direction 1171 of the magnetic field formed due to the input current may have the same phase as a direction 1173 of the magnetic field formed due to the induced current, and thus the strength of the total magnetic field may increase. Conversely, within the feeder 1160, a direction 1181 of the magnetic field formed due to the input current may have a phase opposite to a phase of a direction 1183 of the magnetic field formed due to the induced current, and thus the strength of the total magnetic field may decrease. Therefore, the strength of the total magnetic field may decrease in the center of the source resonator 1150, but may increase outside the source resonator 1150.

The feeder 1160 may determine an input impedance by adjusting an internal area of the feeder 1160. The input impedance refers to an impedance viewed in a direction from the feeder 1160 to the source resonator 1150. When the internal area of the feeder 1160 is increased, the input impedance may be increased. Conversely, when the internal area of the feeder 1160 is reduced, the input impedance may be reduced. Because the magnetic field is randomly distributed in the source resonator 1150 despite a reduction in the input impedance, a value of the input impedance may vary based on a location of a target device. Accordingly, a separate matching network may be required to match the input impedance to an output impedance of a power amplifier. For example, when the input impedance is increased, a separate matching network may be used to match the increased input impedance to a relatively low output impedance.

As an example, when a target resonator has the same configuration as the source resonator 1150, and when a feeder of the target resonator has the same configuration as the feeder 1160, a separate matching network may be required, because a direction of a current flowing in the target resonator has a phase opposite to a phase of a direction of an induced current flowing in the feeder of the target resonator.

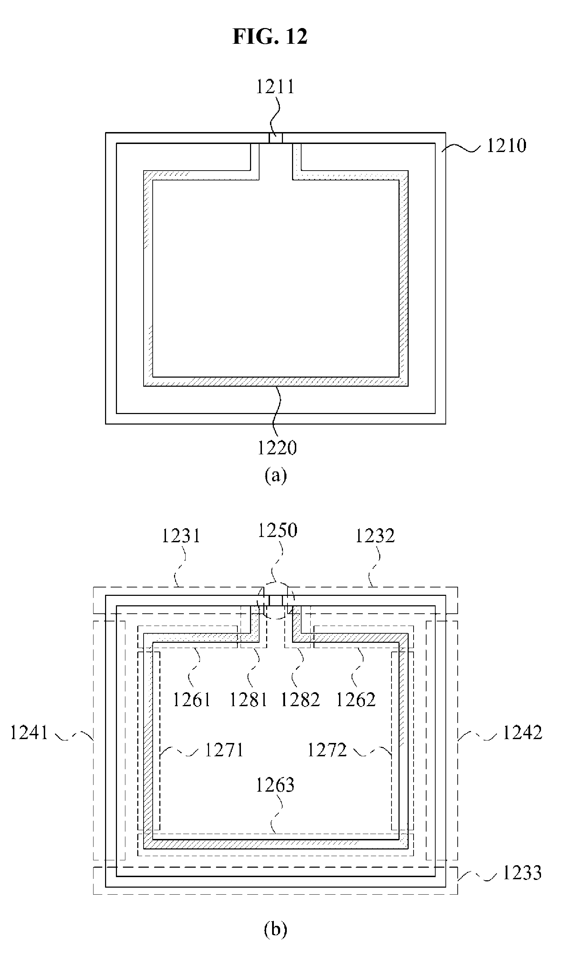

FIG. 12 is a diagram illustrating an example of a wireless power transmitting apparatus according to an embodiment.

Referring to FIG. 12 (a), the wireless power transmitting apparatus may include a source resonator 1210, and a feeding unit 1220. The source resonator 1210 may include a capacitor 1211. The feeding unit 1220 may be electrically connected to both ends of the capacitor 1211.

FIG. 12 (b) illustrates, in detail, a structure of the wireless power transmitting apparatus of FIG. 12 (a). The source resonator 1210 may include a first transmission line, a first conductor 1241, a second conductor 1242, and at least one first capacitor 1250.

The first capacitor 1250 may be inserted in series between a first signal conducting portion 1231 and a second signal conducting portion 1232 in the first transmission line, and an electric field may be confined within the first capacitor 1250. For example, the first transmission line may include at least one conductor in an upper portion of the first transmission line, and may also include at least one conductor in a lower portion of the first transmission line. Current may flow through the at least one conductor disposed in the upper portion of the first transmission line, and the at least one conductor disposed in the lower portion of the first transmission line may be electrically grounded. For example, a conductor disposed in an upper portion of the first transmission line may be separated into and thereby be referred to as the first signal conducting portion 1231 and the second signal conducting portion 1232. A conductor disposed in a lower portion of the first transmission line may be referred to as a first ground conducting portion 1233.

As illustrate in FIG. 12 (b), the source resonator 1210 may have a two-dimensional (2D) structure. The first transmission line may include the first signal conducting portion 1231 and the second signal conducting portion 1232 in the upper portion of the first transmission line. In addition, the first transmission line may include the first ground conducting portion 1233 in the lower portion of the first transmission line. The first signal conducting portion 1231 and the second signal conducting portion 1232 may be disposed to face the first ground conducting portion 1233. The current may flow through the first signal conducting portion 1231 and the second signal conducting portion 1232.

Additionally, as illustrate in FIG. 12 (b), one end of the first signal conducting portion 1231 may be shorted to the first conductor 1241, and another end of the first signal conducting portion 1231 may be connected to the first capacitor 1250. One end of the second signal conducting portion 1232 may be shorted to the second conductor 1242, and another end of the second signal conducting portion 1232 may be connected to the first capacitor 1250. Accordingly, the first signal conducting portion 1231, the second signal conducting portion 1232, the first ground conducting portion 1233, and the conductors 1241 and 1242 may be connected to each other, so that the source resonator 1210 may have an electrically closed-loop structure. The term "loop structure" may include, for example, a polygonal structure such as a circular structure, a rectangular structure, and the like. "Having a loop structure" may be used to indicate that the circuit is electrically closed.

The first capacitor 1250 may be inserted into an intermediate portion of the first transmission line. For example, the first capacitor 1250 may be inserted into a space between the first signal conducting portion 1231 and the second signal conducting portion 1232. The first capacitor 1250 may have a shape of a lumped element, a distributed element, and the like. For example, a distributed capacitor having the shape of the distributed element may include zigzagged conductor lines and a dielectric material that has a high permittivity between the zigzagged conductor lines.

When the first capacitor 1250 is instead into the first transmission line, the source resonator 1210 may have a characteristic of a metamaterial. The metamaterial indicates a material having a predetermined electrical property that has not been discovered in nature, and thus, may have an artificially designed structure. An electromagnetic characteristic of the materials existing in nature may have a unique magnetic permeability or a unique permittivity. Most materials may have a positive magnetic permeability or a positive permittivity.

In the case of most materials, a right hand rule may be applied to an electric field, a magnetic field, and a pointing vector, and thus, the corresponding materials may be referred to as right handed materials (RHMs). However, the metamaterial that has a magnetic permeability or a permittivity absent in nature may be classified into an epsilon negative (ENG) material, a mu negative (MNG) material, a double negative (DNG) material, a negative refractive index (NRI) material, a left-handed (LH) material, and the like, based on a sign of the corresponding permittivity or magnetic permeability.

When a capacitance of the first capacitor 1250 inserted as the lumped element is appropriately determined, the source resonator 1210 may have the characteristic of the metamaterial. Because the source resonator 1210 may have a negative magnetic permeability by appropriately adjusting the capacitance of the first capacitor 1250, the source resonator 1210 may also be referred to as an MNG resonator. Various criteria may be applied to determine the capacitance of the first capacitor 1250. For example, the various criteria may include a criterion for enabling the source resonator 1210 to have the characteristic of the metamaterial, a criterion for enabling the source resonator 1210 to have a negative magnetic permeability in a target frequency, a criterion for enabling the source resonator 1210 to have a zeroth order resonance characteristic in the target frequency, and the like. Based on at least one criterion among the aforementioned criteria, the capacitance of the first capacitor 1250 may be determined.

The source resonator 1210, also referred to as the MNG resonator 1210, may have a zeroth order resonance characteristic of having, as a resonance frequency, a frequency when a propagation constant is "0". Because the source resonator 1210 may have the zeroth order resonance characteristic, the resonance frequency may be independent with respect to a physical size of the MNG resonator 1210. By appropriately designing the first capacitor 1250, the MNG resonator 1210 may sufficiently change the resonance frequency. Accordingly, the physical size of the MNG resonator 1210 may not be changed.

In a near field, the electric field may be concentrated on the first capacitor 1250 inserted into the first transmission line. Accordingly, due to the first capacitor 1250, the magnetic field may become dominant in the near field. The MNG resonator 1210 may have a relatively high Q-factor using the first capacitor 1250 of the lumped element, and thus, it is possible to enhance an efficiency of power transmission. For example, the Q-factor may indicate a level of an ohmic loss or a ratio of a reactance with respect to a resistance in the wireless power transmission. The efficiency of the wireless power transmission may increase according to an increase in the Q-factor.

Although not illustrated in FIG. 12 (b), a magnetic core may be further provided to pass through the MNG resonator 1210. The magnetic core may perform a function of increasing a power transmission distance.

Referring to FIG. 12 (b), the feeding unit 1220 may include a second transmission line, a third conductor 1271, a fourth conductor 1272, a fifth conductor 1281, and a sixth conductor 1282.

The second transmission line may include a third signal conducting portion 1261 and a fourth signal conducting portion 1262 in an upper portion of the second transmission line. In addition, the second transmission line may include a second ground conducting portion 1263 in a lower portion of the second transmission line. The third signal conducting portion 1261 and the fourth signal conducting portion 1262 may be disposed to face the second ground conducting portion 1263. Current may flow through the third signal conducting portion 1261 and the fourth signal conducting portion 1262.

Additionally, as illustrated in FIG. 12 (b), one end of the third signal conducting portion 1261 may be shorted to the third conductor 1271, and another end of the third signal conducting portion 1261 may be connected to the fifth conductor 1281. One end of the fourth signal conducting portion 1262 may be shorted to the fourth conductor 1272, and another end of the fourth signal conducting portion 1262 may be connected to the sixth conductor 1282. The fifth conductor 1281 may be connected to the first signal conducting portion 1231, and the sixth conductor 1282 may be connected to the second signal conducting portion 1232. The fifth conductor 1281 and the sixth conductor 1282 may be connected in parallel to both ends of the first capacitor 1250. Here, the fifth conductor 1281 and the sixth conductor 1282 may be used as input ports to receive an input of an RF signal.

Accordingly, the third signal conducting portion 1261, the fourth signal conducting portion 1262, the second ground conducting portion 1263, the third conductor 1271, the fourth conductor 1272, the fifth conductor 1281, the sixth conductor 1282, and the source resonator 1210 may be connected to each other, so that the source resonator 1210 and the feeding unit 1220 may have an electrically closed-loop structure. The term "loop structure" may include, for example, a polygonal structure such as a circular structure, a rectangular structure, and the like. When an RF signal is received via the fifth conductor 1281 or the sixth conductor 1282, an input current may flow in the feeding unit 1220 and the source resonator 1210, a magnetic field may be formed due to the input current, and a current may be induced to the source resonator 1210 by the formed magnetic field. A direction of the input current flowing in the feeding unit 1220 may be identical to a direction of the induced current flowing in the source resonator 1210 and thus, strength of the total magnetic field may increase in the center of the source resonator 1210, but may decrease outside the source resonator 1210.

An input impedance may be determined based on an area of a region between the source resonator 1210 and the feeding unit 1220 and accordingly, a separate matching network used to match the input impedance to an output impedance of a power amplifier may not be required. For example, even when the matching network is used, the input impedance may be determined by adjusting a size of the feeding unit 1220 and thus, a structure of the matching network may be simplified. The simplified structure of the matching network may minimize a matching loss of the matching network.

The second transmission line, the third conductor 1271, the fourth conductor 1272, the fifth conductor 1281, and the sixth conductor 1282 may form the same structure as the source resonator 1210. In an example in which the source resonator 1210 has a loop structure, the feeding unit 1220 may also have a loop structure. In another example in which the source resonator 1210 has a circular structure, the feeding unit 1220 may also have a circular structure.

The configuration of the source resonator 1210 and the configuration of the feeding unit 1220, as described above, may equally be applied to the target resonator and the feeding unit of the target resonator, respectively. When the feeding unit of the target resonator is configured as described above, the feeding unit may match an output impedance of the target resonator and an input impedance of the feeding unit, by adjusting a size of the feeding unit. Accordingly, a separate matching network may not be used.

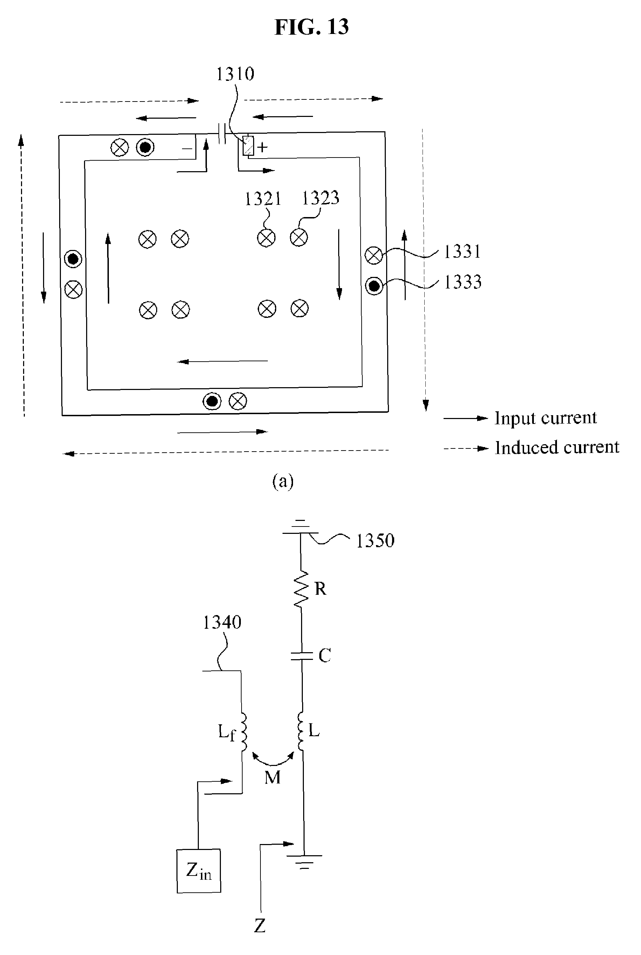

FIG. 13 is a diagram illustrating an example of a distribution of a magnetic field within a source resonator based on feeding of a feeding unit according to an embodiment.

A feeding operation may refer to supplying a power to a source resonator in a wireless power transmitting apparatus, or refer to supplying AC power to a rectification unit in a wireless power receiving apparatus. FIG. 13 (a) illustrates a direction of an input current flowing in the feeding unit, and a direction of an induced current induced in the source resonator. Additionally, FIG. 13 (a) illustrates a direction of a magnetic field formed due to the input current of the feeding unit, and a direction of a magnetic field formed due to the induced current of the source resonator. FIG. 13 (a) more briefly illustrates the source resonator 1810 and the feeding unit 1820 of FIG. 18 (a). FIG. 13 (b) illustrates an equivalent circuit of a feeding unit, and an equivalent circuit of a source resonator.

Referring to FIG. 13 (a), a fifth conductor or a sixth conductor of the feeding unit may be used as an input port 1310. The input port 1310 may receive an input of an RF signal. The RF signal may be output from a power amplifier. The power amplifier may increase or decrease an amplitude of the RF signal, on demand by a target device. The RF signal received by the input port 1310 may be displayed in the form of an input current flowing in the feeding unit. The input current may flow in a clockwise direction in the feeding unit, along a transmission line of the feeding unit. The fifth conductor of the feeding unit may be electrically connected to the source resonator. More specifically, the fifth conductor may be connected to a first signal conducting portion of the source resonator. Accordingly, the input current may flow in the source resonator, as well as, in the feeding unit. The input current may flow in a counterclockwise direction in the source resonator. The input current flowing in the source resonator may cause a magnetic field to be formed, so that an induced current may be generated in the source resonator due to the magnetic field. The induced current may flow in a clockwise direction in the source resonator. Here, the induced current may transfer energy to a capacitor of the source resonator, and a magnetic field may be formed due to the induced current. The input current flowing in the feeding unit and the source resonator may be indicated by a solid line of FIG. 13 (a), and the induced current flowing in the source resonator may be indicated by a dotted line of FIG. 13 (a).

A direction of a magnetic field formed due to a current may be determined based on the right hand rule. As illustrated in FIG. 13 (a), within the feeding unit, a direction 1321 of a magnetic field formed due to the input current flowing in the feeding unit may be identical to a direction 1323 of a magnetic field formed due to the induced current flowing in the source resonator. Accordingly, strength of the total magnetic field may increase within the feeding unit.

Additionally, in a region between the feeding unit and the source resonator, a direction 1333 of a magnetic field formed due to the input current flowing in the feeding unit has a phase opposite to a phase of a direction 1331 of a magnetic field formed due to the induced current flowing in the source resonator. Accordingly, strength of the total magnetic field may decrease in the region between the feeding unit and the source resonator.

Typically, a strength of a magnetic field decreases in the center of a source resonator with the loop structure, and increases outside the source resonator. However, referring to FIG. 13 (a), the feeding unit may be electrically connected to both ends of a capacitor of the source resonator, and accordingly the induced current of the source resonator may flow in the same direction as the input current of the feeding unit. Since the induced current of the source resonator flows in the same direction as the input current of the feeding unit, the strength of the total magnetic field may increase within the feeding unit, and may decrease outside the feeding unit. As a result, the strength of the total magnetic field may increase in the center of the source resonator with the loop structure, and may decrease outside the source resonator, due to the feeding unit. Thus, the strength of the total magnetic field may be equalized within the source resonator. Additionally, a power transmission efficiency for transferring a power from the source resonator to a target resonator may be in proportion to the strength of the total magnetic field formed in the source resonator. In other words, when the strength of the total magnetic field increases in the center of the source resonator, the power transmission efficiency may also increase.

Referring to FIG. 13 (b), the feeding unit 1340 and the source resonator 1350 may be expressed by the equivalent circuits. An input impedance $Z_{in}$ viewed in a direction from the feeding unit 1340 to the source resonator 1350 may be computed, as given in the following equation:

$$Z_{in} = \frac{(\omega M)^2}{Z}$$

In the equation, M denotes a mutual inductance between the feeding unit 1340 and the source resonator 1350, $\omega$ denotes a resonance frequency between the feeding unit 1340 and the source resonator 1350, and Z denotes an impedance viewed in a direction from the source resonator 1350 to a target device. The input impedance $Z_{in}$ may be in proportion to the mutual inductance M. Accordingly, the input impedance $Z_{in}$ may be controlled by adjusting the mutual inductance M between the feeding unit 1340 and the source resonator 1350. The mutual inductance M may be adjusted based on an area of a region between the feeding unit 1340 and the source resonator 1350. The area of the region between the feeding unit 1340 and the source resonator 1350 may be adjusted based on a size of the feeding unit 1340. In other words, the input impedance $Z_{in}$ may be determined based on the size of the feeding unit 1340, and thus a separate matching network may not be required to perform impedance matching with an output impedance of a power amplifier.

In a target resonator and a feeding unit included in a wireless power receiving apparatus, a magnetic field may be distributed as illustrated in FIG. 13 (a). For example, the target resonator may receive a wireless power from a source resonator, via magnetic coupling. Due to the received wireless power, an induced current may be generated in the target resonator. A magnetic field formed due to the induced current in the target resonator may cause another induced current to be generated in the feeding unit. In this example, when the target resonator is connected to the feeding unit as illustrated in FIG. 13 (a), the induced current generated in the target resonator may flow in the same direction as the induced current generated in the feeding unit. Thus, strength of the total magnetic field may increase within the feeding unit, but may decrease in a region between the feeding unit and the target resonator.

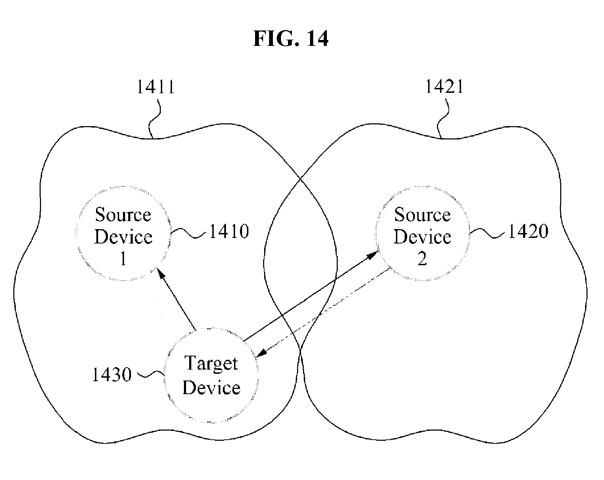

FIG. 14 is a diagram illustrating an example of a multi-source environment similar to the multi-source environment of FIG. 2.

Referring to FIG. 14, the multi-source environment may include a source device 1 1410, and a source device 2 1420. For example, the multi-source environment may include a plurality of source devices.

In FIG. 14, a target device 1430 may be located within a power transmission region 1411 of the source device 1 1410. The target device 1430 may receive wake-up power from the source device 1 1410, to activate a communication function and a control function.

The target device 1430 may be located outside a power transmission region 1421 of the source device 2 1420. When out-band communication is performed in the multi-source environment, a communicable region of the source device 2 1420 may be wider than the power transmission region 1421. Accordingly, the target device 1430 may receive a communication signal from each of the source device 1 1410 and the source device 2 1420.

For example, the target device 1430 may receive a configuration signal from each of the source device 1 1410 and the source device 2 1420. The configuration signal may be, for example, a wake-up request signal, a beacon signal, or a continuous wave (CW) signal.

The configuration signal may include a unique identifier of each of the source device 1 1410 and the source device 2 1420. The unique identifier may be called a "network ID." Accordingly, the source device 1 1410, and the source device 2 1420 may be identified by network IDs.

The target device 1430 may select a source device that is to transmit power, based on a value of an RSSI of the configuration signal.

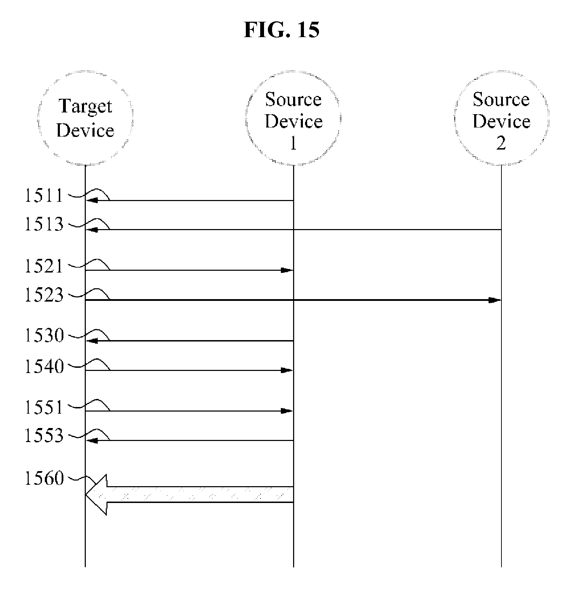

FIG. 15 is a diagram illustrating a communication and wireless power transmission method in the multi-source environment of FIG. 14.

When the source device 1 1410 and the source device 2 1420 are powered on, wake-up power may be periodically output.

The target device 1430 may receive the wake-up power from the source device 1 1410, and may activate the communication function and the control function.

The source device 1 1410 may broadcast a first configuration signal in 1511, and the source device 2 1420 may broadcast a second configuration signal in 1513.

The first configuration signal may include a network ID of the source device 1 1410. The second configuration signal may include a network ID of the source device 2 1420.

The target device 130 may compare an RSSI of the first configuration signal with an RSSI of the second configuration signal, and may select a source device with a higher RSSI. Referring to FIG. 14, the target device 130 may be located nearer the source device 1 1410, than the source device 2 1420. Accordingly, the RSSI of the first configuration signal may be higher than the RSSI of the second configuration signal.

Depending on embodiments, the target device 130 may not select a source device.

In 1521, the target device 130 may unicast or broadcast a first search frame. The first search frame may include at least one of the network ID of the source device 1 1410, and the RSSI of the first configuration signal.

For example, when a source device is not selected by the target device 130 based on an RSSI value, the target device 130 may unicast or broadcast, to the source device 2 1420, a second search frame including at least one of the network ID of the source device 2 1420, and the RSSI of the second configuration signal in 1523.

In other words, when the target device 130 does not select a source device based on an RSSI value, both operations 1521 and 1523 may need to be performed.

For example, when the network ID included in the first search frame is identical to a network ID included in the first configuration signal, the source device 1 1410 may transmit a response frame to the target device 1430 in 1530.

In this example, the source device 1 1410 may transmit the response frame to the target device 1430, only when the network ID included in the first search frame is identical to the network ID included in the first configuration signal, and when a value of the RSSI of the first configuration signal is equal to or greater than a preset value.

Additionally, when a network ID is not included in the first search frame, and when the value of the RSSI of the first configuration signal is equal to or greater than the preset value, the source device 1 1410 may also transmit the response frame to the target device 1430.

When a value of the RSSI of the second configuration signal is less than the preset value, the source device 2 1420 may not transmit a response frame for the second search frame. FIG. 15 illustrates an example in which the value of the RSSI of the second configuration signal is less than the preset value, or an example in which operation 1523 is not performed.

When the response frame is received, the target device 130 may transmit an ACK signal corresponding to the response frame to the source device 1 1410 in 1540.

When a plurality of communication channels are set in advance between the source device 1 1410 and the target device 130, the target device 130 may transmit first search frames through each of the plurality of communication channels in 1521. The first search frames may be transmitted sequentially or randomly for each of the plurality of communication channels.

When a response frame is not received within a preset period of time after the first search frames are transmitted through each of the plurality of communication channels, the target device 130 may determine whether a new configuration signal is received, and operation 1511 may be performed again.

The first search frame may be transmitted two to five times, for each of the plurality of communication channels.

The target device 130 may find the source device 1 1410 through operations 1511 through 1540.

In 1551, the target device 130 may transmit, to the source device 1 1410, a request join frame used to join a wireless power transmission network of the source device 1 1410. The request join frame may include the network ID received in 1511.

When a network ID included in the request join frame is identical to the network ID of the source device 1 1410, the source device 1 1410 may transmit a response join frame to the target device 1430 in 1553. By transmitting the response join frame to the target device 1430, the source device 1 1410 may permit the target device 1430 to join the wireless power transmission network of the source device 1 1410.

The response join frame may include at least one of a variety of information shown in FIG. 10, the network ID, a session ID for communication, and model information of the source device 1 1410. For example, the response join frame may include an identifier used to identify the target device 1430 in the wireless power transmission network, and information on allowable power consumption.

In 1560, the source device 1 1410 may transmit charging power to the target device 1430.

Referring to FIG. 15, the source device 1 1410 may wirelessly transmit wake-up power used to wake up a target device, may broadcast a configuration signal used to configure the wireless power transmission network, may receive, from the target device, a search frame including a value of a reception sensitivity of the configuration signal, may permit the target device to join the wireless power transmission network, may transmit, to the target device, an identifier used to identify the target device in the wireless power transmission network, may generate charging power through power control, and may wirelessly transmit the charging power to the target device.

Additionally, referring to FIG. 15, the target device 1430 may receive wake-up power from at least one of a plurality of source devices, may activate a communication function using the wake-up power, may receive a configuration signal used to configure a wireless power transmission network of each of the plurality of source devices, may select a source device based on a reception sensitivity of the configuration signal, and may wirelessly receive power from the selected source device.

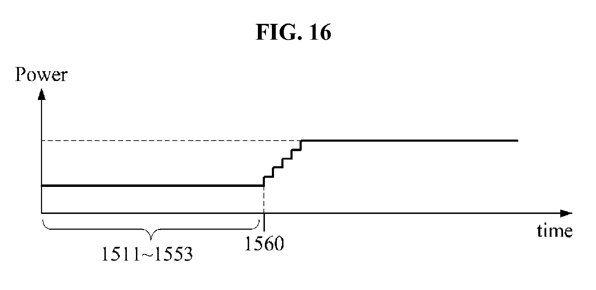

Referring to FIG. 16, an amount of power output from the source device 1 1410 may remain unchanged during operations 1511 through 1553. After operation 1560, the amount of power output from the source device 1 1410 may be increased in stages.

In operations 1511 through 1553, the power output from the source device 1 1410 may be periodically or intermittently transmitted. For example, the power output from the source device 1 1410 may be transmitted only for a few ms, while the first configuration signal is transmitted. When the first configuration signal is periodically transmitted, the wake-up power may also be periodically transmitted.

Unlike a graph of FIG. 16, in operations 1540 through 1553, the amount of the power output from the source device 1 1410 may be greater than an amount of wake-up power, and may be less than an amount of charging power.

The above-described embodiments of the present invention may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the embodiments, or they may be of the kind well-known and available to those having skill in the computer software arts.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

**Claims**

1. A method for controlling communication and power in a wireless power transmitting and charging system, the method comprising:

   transmitting a wake-up request signal for initial communication to at least one target device;
   transmitting charging power to the at least one target device, the charging power being used to charge the at least one target device;
   receiving at least one of information on a reception sensitivity of the wake-up request signal and information on a reception level of the charging power from the at least one target device; and
   detecting a target device located within a power transmission region of a source device, based on at least one of the information on the reception sensitivity of the wake-up request signal and the information on the reception level of the charging power.

2. The method of claim 1, further comprising, prior to the transmitting of the wake-up request signal, transmitting, by the source device, wake-up power to the at least one target device, the wake-up power being used to activate a communication function and a control function of each of the at least one target device.

3. The method of claim 2, wherein the wake-up power, and the charging power are transferred through magnetic coupling formed between a source resonator of the source device and a target resonator of each of the at least one target device.

4. The method of claim 3, wherein a band of a resonant frequency used to form the magnetic coupling is different from a band of a frequency for communication that is used to transmit the wake-up request signal to the at least one target device.

5. The method of claim 1, wherein the transmitting of the wake-up request signal comprises:

   detecting, by the source device, a plurality of communication channels;
   selecting a communication channel with a best state, from among the plurality of communication channels; and
   transmitting the wake-up request signal through the selected communication channel.

6. The method of claim 1, wherein the wake-up request signal comprises a channel fix command to request the at least one target device to maintain a communication channel selected by the source device.

7. The method of claim 6, further comprising:

   assigning a control identifier (ID) to identify a target device located within the power transmission region of the source device.

8. The method of claim 6, wherein, when the reception sensitivity of the wake-up request signal is equal to or greater than a preset value, and when the reception level of the charging power is equal to or greater than a preset level, the source device determines that a target device transmitting the information on the reception sensitivity of the wake-up request signal and the information on the reception level of the charging power is located within the power transmission region of the source device.

9. A method for controlling communication and power in a wireless power transmitting and charging system, the method comprising:

   transmitting, by a source device, wake-up power to at least one target device, the wake-up power being used to activate a communication function and a control function of each of the at least one target device;
   transmitting a wake-up request signal for initial communication to the at least one target device;
   transmitting charging power to the at least one target device based on a preset transmission timing, the charging power being used to charge the at least one target device; and
   receiving, from the at least one target device, at least one of information on a reception sensitivity of the wake-up request signal, information on a wake-up time of the at least one target device, and information on a reception timing of the charging power.

**10.** The method of claim 9, wherein the preset transmission timing is different from a charging power transmission timing of a neighboring source device located within a preset distance from the source device.

**11.** The method of claim 9, further comprising:

detecting a target device located within a power transmission region of the source device, based on at least one of the information on the reception sensitivity of the wake-up request signal, the information on the wake-up time of the at least one target device, and the information on the reception timing of the charging power.

**12.** The method of claim 11, wherein, when the reception sensitivity of the wake-up request signal is equal to or greater than a preset value, and when the information on the reception timing of the charging power is matched to the preset transmission timing, the source device determines that a target device transmitting the information on the reception sensitivity of the wake-up request signal, and the information on the reception timing of the charging power is located within the power transmission region of the source device.

**13.** The method of claim 9, wherein the information on the reception timing of the charging power comprises information on a reception period of the charging power, information on a reception start time of the charging power, and information on a reception end time of the charging power.

**14.** A method for controlling communication and power in a wireless power transmitting and charging system, the method comprising:

receiving, from a source device, wake-up power used to activate a communication function and a control function;
activating a communication module using the wake-up power;
receiving a wake-up request signal for initial communication from the source device;
receiving, from the source device, charging power used to perform charging; and
receiving an assigned control identifier (ID) from the source device, based on information on a reception sensitivity of the wake-up request signal, and information on a reception level of the charging power.

**15.** A method for controlling communication and power in a wireless power transmitting and charging system, the method comprising:

receiving, from a source device, wake-up power used to activate a communication function and a control function;
activating a communication module using the wake-up power;
receiving a wake-up request signal for initial communication from the source device;
receiving charging power based on a preset transmission timing from the source device; and
receiving an assigned control identifier (ID) from the source device, based on information on a reception sensitivity of the wake-up request signal, and information on a reception timing of the charging power.

**16.** A method for controlling communication and power in a wireless power transmitting and charging system, the method comprising:

receiving, from a first source device, wake-up power used to activate a communication function and a control function;
activating a communication module using the wake-up power;
receiving a wake-up request signal for initial communication from a second source device; and
transmitting information on a reception sensitivity of the wake-up request signal to the second source device.

**17.** The method of claim 16, further comprising:

receiving charging power based on a first transmission timing from the first source device; and
transmitting at least one of information on a reception level of the charging power and information on a reception timing of the charging power to the second source device.

**18.** A wireless power transmitting apparatus in a wireless power transmitting and charging system, the wireless power transmitting apparatus comprising:

a power converter to generate wake-up power or charging power by converting a direct current (DC) voltage to an alternating current (AC) voltage, using a resonant frequency;
a source resonator to transmit the wake-up power or the charging power to a target device through magnetic coupling; and
a control/communication unit to transmit a wake-up request signal for initial communication to the target device, via out-band communication, and to receive at least one of information on a reception sensitivity of the wake-up request signal and information on a reception level of the charging power from the target device.

19. The wireless power transmitting apparatus of claim 18, wherein the control/communication unit detects a target device located within a power transmission region of the source device, based on at least one of the information on the reception sensitivity of the wake-up request signal, and the information on the reception level of the charging power.

20. The wireless power transmitting apparatus of claim 19, wherein, when the reception sensitivity of the wake-up request signal is equal to or greater than a preset value, and when the reception level of the charging power is equal to or greater than a preset level, the control/communication unit determines that a target device transmitting the information on the reception sensitivity of the wake-up request signal and the information on the reception level of the charging power is located within the power transmission region of the source device.

21. A wireless power transmitting apparatus in a wireless power transmitting and charging system, the wireless power transmitting apparatus comprising:

a power converter to generate wake-up power or charging power by converting a direct current (DC) voltage to an alternating current (AC) voltage, using a resonant frequency;
a source resonator to transmit the wake-up power or the charging power to a target device through magnetic coupling; and
a control/communication unit to transmit a wake-up request signal for initial communication to the target device via out-band communication, to control a transmission timing of the charging power, and to receive at least one of information on a reception sensitivity of the wake-up request signal, information on a wake-up time of the target device, and information on a reception timing of the charging power from the target device.

22. The wireless power transmitting apparatus of claim 21, wherein the control/communication unit detects a target device located within a power transmission region of the source device, based on the information on the reception sensitivity of the wake-up request signal, and the information on the reception timing of the charging power.

23. The wireless power transmitting apparatus of claim 22, wherein, when the reception sensitivity of the wake-up request signal is equal to or greater than a preset value, and when the information on the reception timing of the charging power is matched to a preset transmission timing, the control/communication unit determines that a target device transmitting the information on the reception sensitivity of the wake-up request signal and the information on the reception timing of the charging power is located within the power transmission region of the source device.

24. A wireless power receiving apparatus in a wireless power transmitting and charging system, the wireless power receiving apparatus comprising:

a target resonator to receive wake-up power or charging power from a source device through magnetic coupling, the wake-up power being used to activate a communication function and a control function, and the charging power being used to perform charging;
a communication module to receive a wake-up request signal for initial communication from the source device, and to transmit information on a reception sensitivity of the wake-up request signal, and information on a reception level of the charging power to the source device, the communication module being activated by the wake-up power; and
a controller to detect information on a reception timing of the charging power, the information on the reception sensitivity of the wake-up request signal, and the information on the reception level of the charging power.

25. A wireless power receiving apparatus in a wireless power transmitting and charging system, the wireless power receiving apparatus comprising:

a target resonator to receive wake-up power from a first source device through magnetic coupling, the wake-up power being used to activate a communication function and a control function;
a communication module to receive a wake-up request signal for initial communication from a second source device, and to transmit information on a reception sensitivity of the wake-up request signal to the second source device, the communication module being activated by the wake-up power; and
a controller to detect the reception sensitivity of the wake-up request signal.

26. A method of performing communication and wirelessly transmitting power in a wireless power transmission system, the method comprising:

wirelessly transmitting wake-up power, the wake-up power being used to wake up a target device;
broadcasting a configuration signal, the configuration signal being used to configure a wireless power transmission network;
receiving, from the target device, a search frame comprising a value of a reception sensitivity of the configuration signal;
permitting the target device to join the wireless power transmission network, and transmitting, to the target device, an identifier to identify the target device in the wireless power transmission network; and
generating charging power through power control, and wirelessly transmitting the charging power to the target device.

27. A method of performing communication and wirelessly transmitting power in a wireless power transmission system, the method comprising:

receiving wake-up power from at least one of a plurality of source devices;
activating a communication function using the wake-up power;
receiving a configuration signal used to configure a wireless power transmission network of each of the plurality of source devices;
selecting a source device, based on a reception sensitivity of the configuration signal; and
wirelessly receiving power from the selected source device.

**FIG. 1**

EP 2 731 231 A2

FIG. 2

# FIG. 3

Standby mode

Channel standby mode

Channel search mode

Channel selection mode

Access mode

Communication channel change mode

Charging mode

**FIG. 4**

**FIG. 5**

Power
(receive power)

510

Time

Target
Device 3

Target
Device 1

Target
Device 2

# FIG. 6

|601|603|605|607|609|611|613|
|---|---|---|---|---|---|---|
|SB|T_ID|CMD|Reference point|Call argument|Movement argument|CB|
|N Bit|N Bit|N Bit|N Bit|N Bit|N Bit|N Bit|

(a)

| Reference point field | Call argument field | Movement argument field |
|---|---|---|
| 'M' or 1 'L' or 0 | 1~n | 0~n |

(b)

# FIG. 7

| SB | T_No | CMD | CB |
|----|------|-----|-----|
| N Bit | N Bit | N Bit | N Bit |

710   720   730   740

**FIG. 8**

| 810 | 820 | 830 | 840 |
|:---:|:---:|:---:|:---:|
| PA | SC | CMD | CRC-5 |
| N Bit | N Bit | N Bit | N Bit |

**FIG. 9**

EP 2 731 231 A2

## FIG. 10

| Code | Command |
|------|---------|
| 0001 | Reset |
| 0010 | Target input voltage and current request<br>Target input voltage and current response |
| 0011 | Target DC/DC output voltage and current request<br>Target DC/DC output voltage and current response |
| 0100 | ACK(Acknowledge) |
| 0101 | Power-on request |
| 0110 | Power-off request |
| 0111 | Target state information request<br>Target state information response |
| 1000 | Access standard |
| 1001 | NACK |
| 1010 | Reserved for future use |
| 1110 | Target device registration information request<br>Target device registration information response |
| 1111 | Reserved for future use |
|  | Target resonator on/off request |

# FIG. 11

(a)

Input current

Induced current

(b)

## FIG. 12

1211

1210

1220

(a)

1231    1250    1232

1261  1281  1282  1262

1241    1271    1272    1242

1263

1233

(b)

# FIG. 13

1310

1321  1323

1331
1333

Input current
Induced current

(a)

1350

R

C

1340

$L_f$        L

M

$Z_{in}$

Z

**FIG. 14**

**FIG. 15**

## FIG. 16